# FASCICULE DE BREVET EUROPEEN

(11) **EP 3 556 103 B1**
(45) Date de publication et mention de la délivrance du brevet: **22.09.2021**
(21) Numéro de dépôt: 17825389.4
(22) Date de dépôt: 01.12.2017
(51) Int. Cl.: H04N 21/4402, H04N 21/845, H04N 21/482

(54) **PROCÉDÉ ET DISPOSITIF DE DIFFUSION NUMÉRIQUE MIS EN OEUVRE AU SEIN D'UN RESEAU DE DIFFUSION NUMÉRIQUE**
VERFAHREN UND VORRICHTUNG ZUR DIGITALEN RUNDFUNKÜBERTRAGUNG IN EINEM DIGITALEN RUNDFUNKNETZ
METHOD AND DEVICE FOR DIGITAL BROADCAST IMPLEMENTED IN A DIGITAL BROADCASTING NETWORK

(30) Priorité: 15.12.2016 FR 1662527
(43) Date de publication de la demande: 23.10.2019
(73) Titulaire: Quadrille Ingénierie, 92130 Issy-les-Moulineaux (FR)
(72) Inventeur: BATTAS, Xavier, 92100 Boulogne (FR); GROSBOST, Laurence, 75006 Paris (FR)
(74) Mandataire: Nony
(86) Numéro de dépôt international: PCT/EP2017/081160
(87) Numéro de publication internationale: WO 2018/108578

(56) Documents cités:
- WO-A1-2016/151052
- GB-A- 2 462 732
- PANTOS R ET AL: "HTTP Live Streaming; draft-pantos-http-live-streaming-16.txt", HTTP LIVE STREAMING; DRAFT-PANTOS-HTTP-LIVE-STREAMING-16.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 15 avril 2015 (2015-04-15), pages 1-48, XP015105831,

## Description

La présente invention concerne un procédé et un dispositif de diffusion numérique de contenus multimédia, notamment de contenus audiovisuels.

Il a déjà été proposé de transmettre des contenus multimédia en parallèle des données principales émises par les émetteurs satellites ou de télévision hertzienne, en profitant de la bande passante réservée aux données privées.

La demande WO2016/151052 propose ainsi une segmentation du contenu multimédia à transmettre en une multitude de petits morceaux appelés « chunks » qui sont concaténés à un instant déterminé dans un conteneur de données doté d'un entête, ce dernier comprenant pour chaque chunk l'identifiant du service auquel il appartient et sa taille. Un terminal utilisant une playlist également appelée « manifest » est utilisée pour lire le contenu multimédia.

L'une des limitations de cette technique est que si l'un des messages transmis est perdu ou altéré, la reconstruction des chunks côté réception devient impossible, les normes actuelles, comme la norme DVB, ne garantissant pas qu'un message ne puisse être perdu ou altéré.

La demande GB 2462732 divulgue une méthode de diffusion de chunks faisant partie de fichiers d'archive transmis séquentiellement dans le flux de données.

Une autre problématique de la diffusion numérique par télévision numérique terrestre ou par satellite est que le flux transmis est reçu par câble coaxial sur les postes de télévision mais n'est pas adapté à être reçu directement sur un terminal mobile tel qu'une tablette ou un smartphone, alors qu'il serait souhaitable de pouvoir utiliser de tels lecteurs, aujourd'hui très répandus, pour lire de tels contenus.

Il existe donc un besoin pour perfectionner encore les réseaux de diffusion numérique afin notamment d'améliorer leur fiabilité, et de permettre leur adaptabilité et leur portabilité à tout type de terminaux, et en particulier ceux disposant d'une réception WIFI ou similaire.

L'invention est définie par les revendications.

Grâce à l'invention, les messages de données contenant les segments d'archive de chunks et les messages d'annonce véhiculant les informations nécessaires au désarchivage sont diffusés de façon séparée. De plus, la diffusion des messages d'annonce se fait de façon répétée. Ceci augmente la fiabilité de la transmission des données au sein du réseau de diffusion numérique, et réduit la quantité de données perdues lorsqu'un terminal est utilisé comme lecteur du contenu multimédia.

L'invention pourra être mieux comprise à la lecture de la description qui va suivre, d'exemples non limitatifs de mise en œuvre de celle-ci, et à l'examen du dessin annexé, sur lequel:
- la figure 1 représente de façon schématique un exemple d'infrastructure générale d'un réseau de diffusion numérique mettant en œuvre un procédé de diffusion et un procédé de réception d'un flux multimédia selon l'invention,
- la figure 2 illustre schématiquement un exemple d'architecture d'un émetteur selon l'invention,
- les figures 3 et 4 représentent schématiquement la réception de données numériques par un terminal mobile selon un exemple de mise en œuvre de l'invention et l'architecture d'un exemple de récepteur selon l'invention,
- la figure 5 illustre la concaténation de chunks en un fichier d'archive, et
- la figure 6 représente l'émission des données sur deux canaux différents.

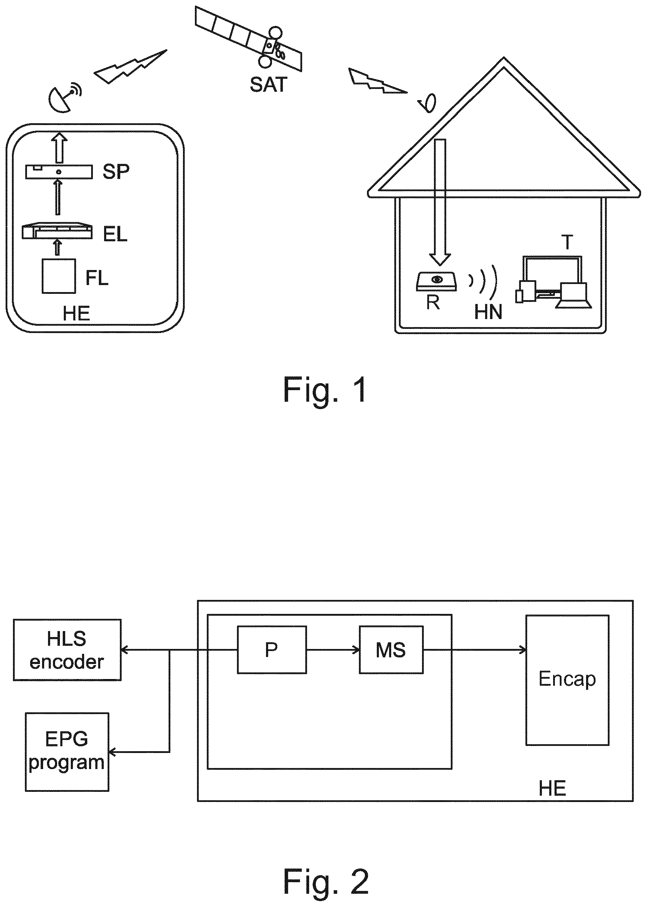

On a représenté à la figure 1 un exemple d'infrastructure générale d'un réseau de diffusion de données numériques par satellite SAT. Du côté émission HE, un flux multimédia à transmettre FL est encodé par un encodeur EL en un format de streaming, par exemple HLS. Ce flux encodé est ensuite ingéré par un serveur Push SP, et diffusé par exemple conformément à la norme de diffusion DVB sur un réseau de télévision numérique terrestre ou de télévision par satellite.

Du côté réception HN, le flux est reçu par un récepteur R et transmis par un réseau sans fil, notamment de type WIFI, à un terminal mobile T.

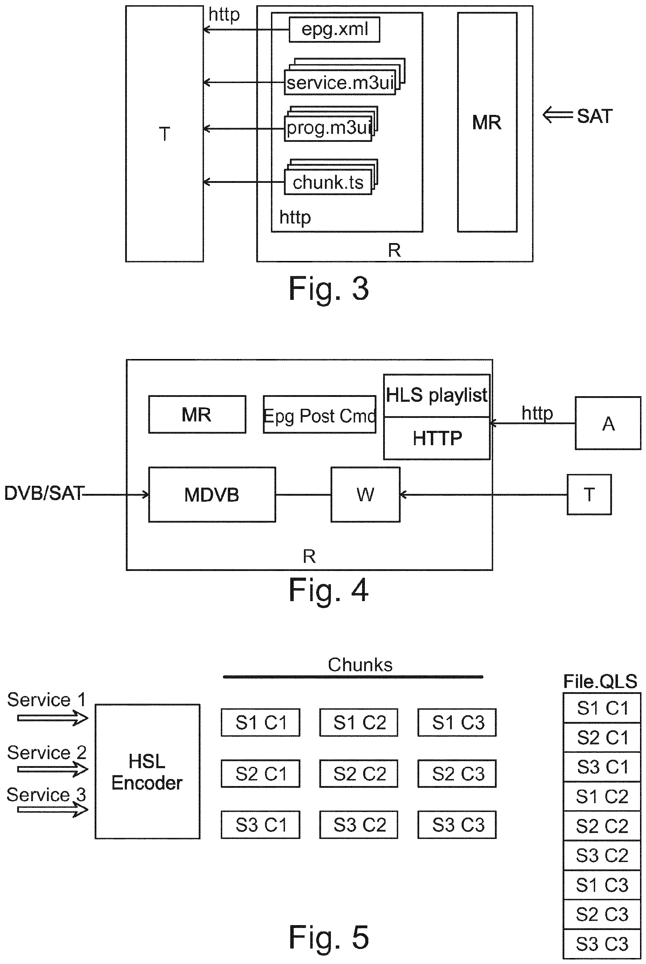

Le récepteur R est par exemple un récepteur de télévision par satellite relié à un téléviseur, notamment chez un particulier ou dans un établissement commercial tel qu'un hôtel. Le terminal T est par exemple une tablette, un ordinateur portable ou un smartphone. Le récepteur R est relié par un câble coaxial à une antenne satellite dotée d'une tête mono ou multisatellite. Le récepteur R comporte un décodeur, et il est par exemple déployé par un opérateur contribuant à la fourniture d'un ou plusieurs contenus via le réseau de diffusion. La figure 4 illustre schématiquement l'architecture d'un exemple de récepteur R selon l'invention. Le composant MDVB est un middleware gérant les ressources du récepteur R. Le récepteur R comprend par exemple un module de réception MR et un serveur http.

La figure 2 représente schématiquement l'architecture d'un exemple d'émetteur selon l'invention. En amont de cet émetteur, l'opérateur satellite fournit deux types de flux : un flux EPG accessible par exemple par internet, fournissant la description des services sous forme XML, et un flux provenant d'un ou plusieurs encodeurs, notamment au format HLS. Le ou les encodeurs fournissent par exemple jusqu'à cinquante contenus en temps réel. L'émetteur HE comprend une machine hôte, tournant par exemple sous Debian 7, hébergeant des composants logiciels P et MS. Le composant P est une application qui récupère en mode attente active (*polling* en anglais) les chunks à la sortie de l'encodeur et en génère un fichier d'archive. Le composant MS est une application qui découpe le fichier d'archive en segments. Ces derniers sont émis par le composant MS pour être encapsulés sous le format DVB par une application Encap.

La figure 3 illustre schématiquement la chaîne de réception et de traitement des données numériques jusqu'au terminal mobile T. Ces données numériques correspondent notamment à un ensemble de chaînes diffusées par au moins un opérateur satellite, appelées services.

Le module de réception MR précité reçoit les données numériques acheminées par satellite sans voie de retour. Le serveur http permet au terminal T, muni d'une application adéquate pour la lecture de données, d'accéder à ces dernières présentées sous format standard de playlist, par exemple service.m3ui et prog.m3ui, de chunks, par exemple chunk.ts et de fichier XML, par exemple epg.xml pour les informations de description. Ainsi, le terminal T est à même d'exploiter ces fichiers, en temps réel légèrement différé, au moyen d'un lecteur (appelé « player ») conventionnel.

Le module de réception MR est configuré pour récupérer les segments dans le flux DVB et reconstruire le fichier d'archive et le fichier associé EPG.

Les chunks et les informations de description sont extraits respectivement du fichier d'archive et du fichier associé par exemple par une application EpgPostCmd.

A chaque nouvelle réception de chunks, une playlist est construite dynamiquement par exemple par une application HLSplaylist.

Le serveur HTTP permet à un client A d'accéder à cette playlist via une connexion http. Le terminal T peut recevoir la playlist à travers le routeur WIFI W.

La figure 5 illustre la concaténation de chunks en un fichier d'archive. Un fichier nommé par exemple File.QLS regroupe les chunks C1, C2, C3, ... de différents services S1, S2, S3, ... par instants d'émission successifs. Le nombre de chunks correspond au nombre de services, en l'occurrence trois dans l'exemple illustré.

Un fichier d'archive peut être de taille variable, par exemple un multiple de 188 octets qui est la taille d'un paquet dans la norme DVB.

Les chunks sont collés les uns aux autres. Il faut donc connaître leur taille ainsi que les identifiants des services auxquels ils appartiennent afin de pouvoir désarchiver correctement le fichier File.QLS. Ces informations ne doivent pas être perdues lors de la diffusion. Pour cette raison, l'invention met en œuvre une diffusion de façon répétée des informations nécessaires au désarchivage dans des messages d'annonce qui sont séparés du fichier d'archive.

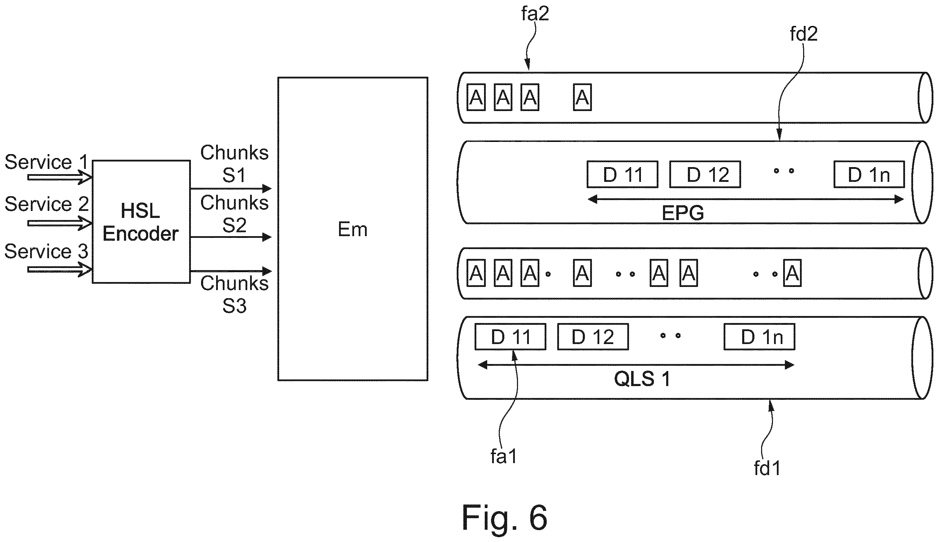

La figure 6 illustre l'émission des données sur deux canaux virtuels différents. Par « canal virtuel » on désigne un flux de données regroupées sous un même identifiant réseau. Le serveur Push Em qui reçoit les chunks de trois services dans l'exemple illustré, les concatène en un fichier QLS1 et les découpe en segments. Ensuite, la transmission des données se fait sur deux canaux virtuels distincts : un canal dit QLS pour la transmission des fichiers d'archives et un canal EPG pour la transmission des fichiers associés. Chaque canal véhicule un flux de données et un flux d'annonce.

Le flux d'annonce fal du canal QLS est constitué de messages d'annonce qui sont émis de façon répétée, de préférence en parallèle du fichier d'archive QLS1. Ces messages d'annonce véhiculent toutes les informations nécessaires pour que les récepteurs R puissent initier à tout moment la réception des chunks. Un message d'annonce est renvoyé en boucle, ce qui permet à un récepteur R qui vient à l'écoute du réseau de pouvoir réceptionner la prochaine archive, et donc de mettre à disposition les flux en temps réel.

On donne ci-après un tableau présentant un exemple non limitatif de message d'annonce du canal QLS, en particulier les champs de ce message, leur description et leurs tailles respectives.

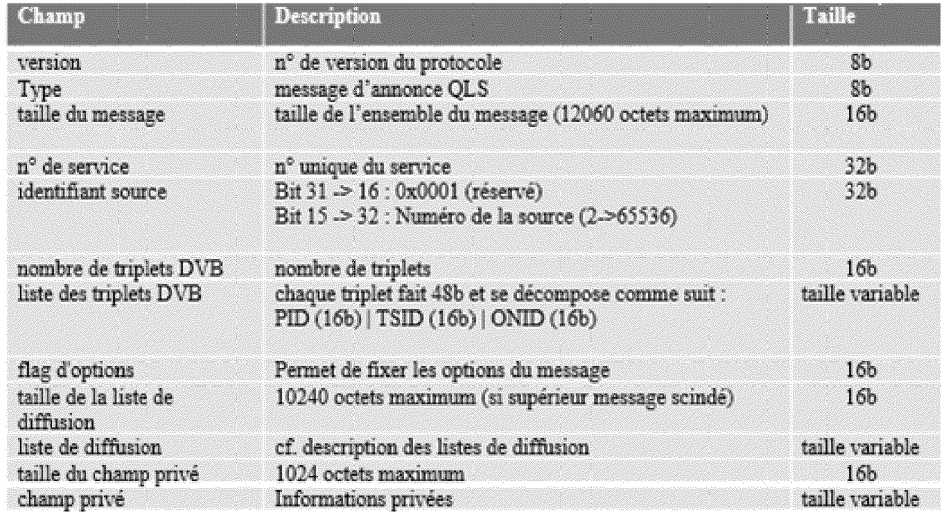

Le champ « liste de diffusion » permet d'adresser un groupe de récepteurs R. Seuls les récepteurs R du groupe concerné s'abonneront au flux de données.

Les informations privées contiennent les données nécessaires pour le désarchivage de l'archive QLS en cours de diffusion. Ces informations sont donc diffusées plusieurs fois, ce qui permet de garantir que les récepteurs R les recevront. Seules ces informations privées contenant les informations d'indexation de l'archive QLS sont modifiées à chaque nouveau fichier d'archive diffusé sur le flux de données du canal QLS.

Le flux de données fdl du canal QLS est constitué de messages de données qui véhiculent une archive QLS contenant une série de chunks. Ces messages de données ont une taille fixe qui dépend du réseau. Cette taille est par exemple de 1316 octets. Comme une archive QLS a une taille supérieure, les fichiers d'archive sont découpés en plusieurs segments. Le récepteur R est configuré pour reconstruire le fichier d'archive à partir de ces segments. Les messages de données contiennent un entête qui permet d'identifier le segment correspondant.

On donne ci-après un tableau présentant un exemple de message de données du canal QLS, en particulier les champs de ce message, leur description et leurs tailles respectives.

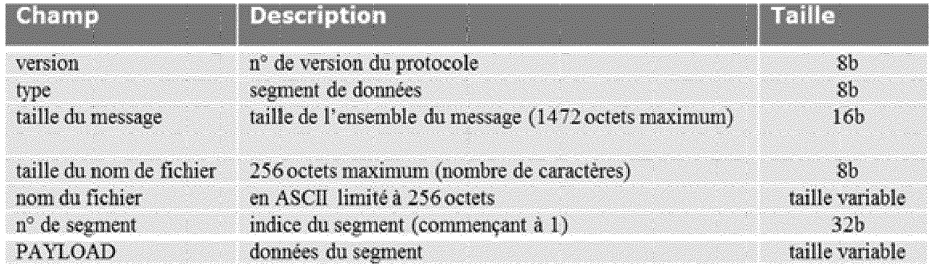

La payload contient un segment issu du découpage du fichier d'archive.

Le flux d'annonce fa2 du canal EPG est constitué de messages d'annonce qui sont émis de façon répétée, de préférence avant la diffusion du fichier associé correspondant. Ces messages d'annonce véhiculent toutes les informations nécessaires pour que les récepteurs puissent initier à tout moment la réception du fichier associé. Un message d'annonce est renvoyé pendant une durée paramétrable.

Le tableau ci-dessous présente un exemple de message d'annonce du canal EPG, en particulier les champs de ce message, leur description et leurs tailles respectives.

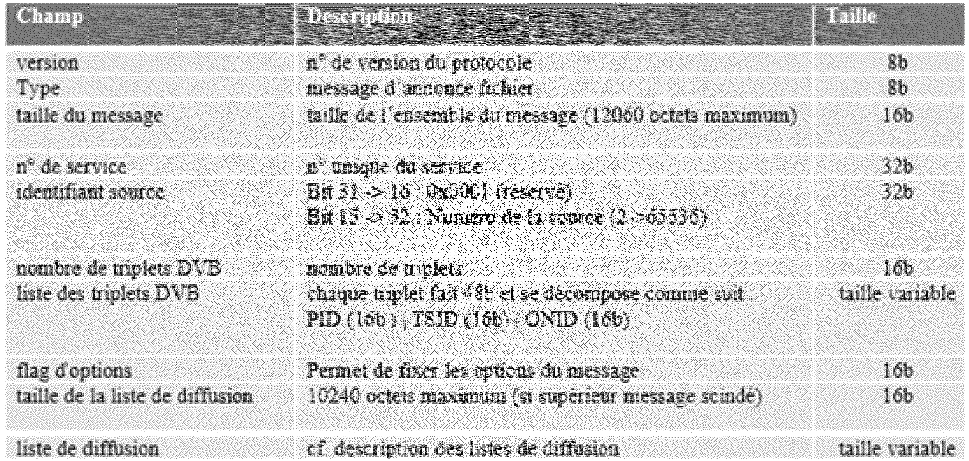

Un fichier EPG, éventuellement mis à jour, est diffusé en boucle pour que n'importe quel récepteur R qui se connecte au système puisse le recevoir.

Le flux de données fd2 du canal EPG est constitué de messages de données qui véhiculent le fichier associé EPG. Comme les messages de données du canal QLS, les messages de données du canal EPG ont également une taille fixe qui dépend du réseau, par exemple de 1316 octets. Le fichier associé est donc aussi découpé en plusieurs segments. Le récepteur R est configuré pour reconstruire le fichier EPG à partir de ces segments. Les messages de données contiennent un entête qui permet d'identifier le segment.

Le tableau ci-dessous présente un exemple de message de données du canal EPG, en particulier les champs de ce message, leur description et leurs tailles respectives.

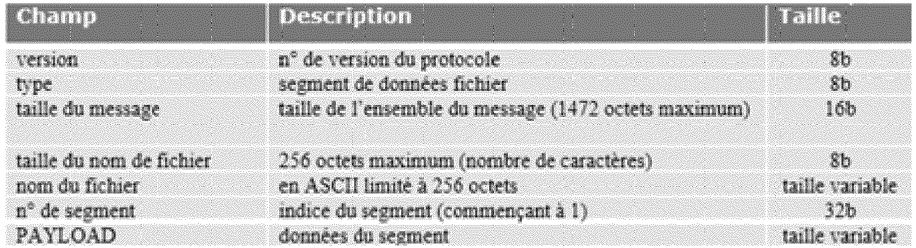

Bien entendu, l'invention n'est pas limitée aux exemples qui viennent d'être donnés. Par exemple, les chaînes d'émission et de réception peuvent être conçues différemment en fonction de l'application visée. Les champs des messages et leur taille peuvent aussi être adaptés à l'application cible. Par ailleurs, le nombre de chunks peut ne pas dépendre du nombre de services diffusés.

## Revendications

1. Procédé de diffusion d'au moins un flux multimédia d'au moins un service (S1 ; S2 ; S3), au sein d'un réseau de télévision numérique terrestre ou de télévision par satellite, comprenant les étapes consistant à :
- concaténer des séries de chunks (C1, C2, C3) correspondant à un ou plusieurs flux, en fichiers d'archives (QLS, fd1) sans toutes les informations de désarchivage correspondantes, les chunks (C1, C2, C3) possédant chacun un identifiant et résultant du découpage d'un flux multimédia correspondant à plusieurs services (S1, S2, S3), un même fichier d'archive comportant des chunks (C1, C2, C3) relatifs à ces différents services (S1, S2, S3),
- diffuser au moins les fichiers d'archives (QLS, fd1) sur un canal du réseau,
- diffuser, de façon répétée, au moins pour chaque fichier d'archive des messages d'annonce (A, fa1, fa2) contenant des informations nécessaires au désarchivage du fichier d'archive, la diffusion des messages d'annonce se faisant en parallèle d'au moins chaque fichier d'archive correspondant,
le procédé comportant la diffusion d'au moins un fichier associé, (EPG, fd2) contenant des informations de description dudit au moins un service (S1 ; S2 ; S3), sur un autre canal du réseau.

2. Procédé selon la revendication 1, le procédé comportant la diffusion de façon répétée de messages d'annonce correspondant aux fichiers associés, cette diffusion ayant de préférence lieu avant la diffusion du fichier associé correspondant.

3. Procédé selon la revendication 2, chaque fichier associé comportant l'identifiant d'un service (S1 ; S2; S3) auquel appartiennent les chunks (C1, C2, C3).

4. Procédé selon l'une quelconque des revendications précédentes, le fichier d'archive regroupant les chunks (C1, C2, C3) des différents services (S1, S2, S3) par instants d'émission successifs (S1 C1, S2 C1, S3 C1, S1 C2, S2 C2, ...).

5. Procédé selon l'une quelconque des revendications précédentes, les messages d'annonce du fichier d'archive comportant la taille des chunks (C1, C2, C3) du fichier d'archive correspondant.

6. Procédé selon l'une quelconque des revendications précédentes, l'émission d'un même message d'annonce étant répétée toutes les N millisecondes durant l'émission du fichier d'archive correspondant, avec N compris entre 500 et 60 000.

7. Procédé selon l'une quelconque des revendications 2 à 6, le réseau diffusant des messages (D11, D12, ..., D1n) de taille fixe comportant chacun un entête et une payload contenant un paquet issu de la segmentation d'un fichier d'archive, voire également d'un fichier associé correspondant.

8. Procédé selon l'une quelconque des revendications précédentes, le flux multimédia étant dans un format de streaming, notamment généré par un encodeur (HLS).

9. Procédé de réception de données d'un réseau de télévision numérique terrestre ou de télévision par satellite, diffusées en mettant en œuvre le procédé selon l'une quelconque des revendications précédentes, comportant les étapes consistant à :
- recevoir des segments issus d'une segmentation du fichier d'archive,
- reconstruire le fichier d'archive à partir des segments,
- récupérer les messages d'annonce,
- désarchiver le fichier d'archive et en récupérer un contenu composé de chunks (C1, C2, C3)construire dynamiquement une playlist permettant d'accéder audit au moins un service (S1 ; S2 ; S3) depuis un terminal portable (T) en streaming,
procédé dans lequel, de préférence, les chunks (C1, C2, C3) sont diffusés audit terminal portable (T) par une liaison sans fil.

10. Procédé selon la revendication 9, la lecture des chunks (C1, C2, C3) par le terminal (T) se faisant par l'intermédiaire de ladite playlist enchainant ces derniers en temps réel.

11. Procédé selon l'une des revendications 9 et 10, le tri des chunks (C1, C2, C3) par service se faisant par le récepteur (R) en utilisant des informations véhiculées dans les messages d'annonce et des messages de description diffusés sur un autre canal du réseau.

12. Dispositif de traitement numérique d'au moins un flux multimédia d'au moins un service (S1 ; S2 ; S3), en vue de la diffusion par un procédé selon l'une quelconque des revendications 1 à 8 de données résultant du traitement sur un réseau de télévision numérique terrestre ou de télévision par satellite, comportant :
- un module de récupération des chunks (C1, C2, C3),
- un module de préparation des données à diffuser, configuré pour concaténer les séries de chunks (C1, C2, C3) en fichiers d'archive,
- un module de diffusion des fichiers d'archive et des messages d'annonce, et d'envoi de ces messages d'annonce sur un port de sortie correspondant, en vue de leur diffusion de façon répétée, en parallèle de chaque fichier d'archive correspondant.

13. Dispositif de réception numérique pour la réception de données transmises par un réseau de télévision numérique terrestre ou de télévision par satellite via le procédé selon l'une quelconque des revendications 1 à 8, comportant :
- un module de réception de données, dont des données relatives aux fichiers d'archives comportant les chunks (C1, C2, C3) concaténés et les messages d'annonce,
- un module de reconstruction d'un fichier d'archive,
- un module de désarchivage du fichier d'archive, à partir d'informations contenues dans les messages d'annonce, et de récupération des chunks (C1, C2, C3),
- un module de création dynamique d'une playlist référençant les chunks (C1, C2, C3) reçus,
- de préférence, un module de transmission sans fil (W) permettant au terminal de se connecter au récepteur et de streamer des flux contenant les chunks (C1, C2, C3).

14. Produit programme d'ordinateur comprenant des instructions lisibles par un processeur et permettant à leur exécution la mise en œuvre d'un procédé de diffusion selon l'une quelconque des revendications 1 à 8 ou d'un procédé de réception selon l'une quelconque des revendications 9 à 11.

## Patentansprüche

1. Verfahren zum Senden wenigstens eines Multimediastroms wenigstens eines Dienstes (Sl; S2; S3) in einem terrestrischen digitalen oder satellitengestützten Fernsehnetz, das die folgenden Schritte umfasst:
- Verketten von Datenblockreihen (C1, C2, C3), die einem oder mehreren Strömen entsprechen, zu Archivdateien (QLS, fd1) ohne alle entsprechenden Dearchivierungsinformationen, wobei die Datenblöcke (C1, C2, C3) jeweils eine Kennung besitzen und sich aus dem Zerteilen eines Multimediastroms, der mehreren Diensten (S1, S2, S3) entspricht, ergeben, wobei dieselbe Archivdatei Datenblöcke (C1, C2, C3) enthält, die auf diese verschiedenen Dienste (S1, S2, S3) bezogen sind,
- Senden wenigstens der Archivdateien (QLS, fd) auf einem Kanal des Netzes,
- Senden auf wiederholte Weise wenigstens für jede Archivdatei von Ankündigungsnachrichten (A, fa1, fa2), die für die Dearchivierung der Archivdatei erforderliche Informationen enthalten, wobei das Senden der Ankündigungsnachrichten parallel wenigstens zu jeder entsprechenden Archivdatei erfolgt,
wobei das Verfahren das Senden wenigstens einer zugeordneten Datei (EPG, fd2), die Informationen zur Beschreibung des wenigstens einen Dienstes (Sl; S2; S3) enthält, auf einem anderen Kanal des Netzes umfasst.

2. Verfahren nach Anspruch 1, wobei das Verfahren das Senden auf wiederholte Weise von Ankündigungsnachrichten, die den zugeordneten Dateien entsprechen, umfasst, wobei dieses Senden vorzugsweise vor dem Senden der entsprechenden zugeordneten Datei erfolgt.

3. Verfahren nach Anspruch 2, wobei jede zugeordnete Datei die Kennung eines Dienstes (Sl; S2; S3), zu dem die Datenblöcke (C1, C2, C3) gehören, enthält.

4. Verfahren nach einem der vorhergehenden Ansprüche, wobei die Archivdatei die Datenblöcke (C1, C2, C3) der verschiedenen Dienste (S1, S2, S3) entsprechend aufeinander folgender Sendezeitpunkte (S1 C1, S2 C1, S3 C1, S1 C2, S2 C2, ...) gruppiert.

5. Verfahren nach einem der vorhergehenden Ansprüche, wobei die Ankündigungsnachrichten der Archivdatei die Größe der Datenblöcke (C1, C2, C3) der entsprechenden Archivdatei enthält.

6. Verfahren nach einem der vorhergehenden Ansprüche, wobei das Senden derselben Ankündigungsnachricht während des Sendens der entsprechenden Archivdatei alle N Millisekunden wiederholt wird, wobei N zwischen 500 und 60000 liegt.

7. Verfahren nach einem der Ansprüche 2 bis 6, wobei das Netz Nachrichten (D11, D12, ..., D1n) mit fester Größe sendet, wovon jede einen Kopf und eine Nutzlast enthält, die ihrerseits ein Paket, das sich aus der Segmentierung einer Archivdatei oder sogar einer entsprechenden zugeordneten Datei ergibt, enthält.

8. Verfahren nach einem der vorhergehenden Ansprüche, wobei der Multimediastrom ein Streaming-Format hat, das insbesondere durch einen Codierer (HLS) erzeugt wird.

9. Verfahren zum Empfangen von Daten von einem terrestrischen digitalen oder satellitengestützten Fernsehnetz, die durch Ausführen des Verfahrens nach einem der vorhergehenden Ansprüche gesendet werden, das die folgenden Schritte umfasst:
- Empfangen von Segmenten, die sich aus einer Segmentierung der Archivdatei ergeben,
- Rekonstruieren der Archivdatei anhand der Segmente,
- Wiedergewinnen der Ankündigungsnachrichten,
- Dearchivieren der Archivdatei und daraus Wiedergewinnen eines aus Datenblöcken (C1, C2, C3) zusammengesetzten Inhalts und dynamisches Konstruieren einer Playlist, die ermöglicht, von einem tragbaren Endgerät (T) durch Streaming auf wenigstens einen Dienst (Sl; S2; S3) zuzugreifen,
wobei in dem Verfahren die Datenblöcke (C1, C2, C3) vorzugsweise über eine drahtlose Verbindung an das tragbare Endgerät (T) gesendet werden.

10. Verfahren nach Anspruch 9, wobei das Lesen der Datenblöcke (C1, C2, C3) durch das Endgerät (T) über die Playlist, die die Datenblöcke in Echtzeit verkettet, erfolgt.

11. Verfahren nach einem der Ansprüche 9 und 10, wobei das Sortieren der Datenblöcke (C1, C2, C3) entsprechend dem Dienst durch den Empfänger (R) erfolgt, der Informationen verwendet, die in den Ankündigungsnachrichten und in den auf einem anderen Kanal des Netzes gesendeten Beschreibungsnachrichten transportiert werden.

12. Vorrichtung zur digitalen Verarbeitung wenigstens eines Multimediastroms wenigstens eines Dienstes (Sl; S2; S3) für das Senden durch ein Verfahren nach einem der Ansprüche 1 bis 8 von Daten, die sich aus der Verarbeitung in einem terrestrischen digitalen oder satellitengestützten Fernsehnetz ergeben, die Folgendes umfasst:
- ein Modul zum Wiedergewinnen von Datenblöcken (C1, C2, C3),
- ein Modul zum Vorbereiten von zu sendenden Daten, das konfiguriert ist, die Reihen von Datenblöcken (C1, C2, C3) zu Archivdateien zu verketten,
- ein Modul zum Senden der Archivdateien und von Ankündigungsnachrichten und zum Schicken dieser Ankündigungsnachrichten an einen entsprechenden Ausgangsanschluss, um sie auf wiederholte Weise parallel zu jeder entsprechenden Archivdatein zu senden.

13. Digitale Empfangsvorrichtung für den Empfang von Daten, die durch ein terrestrisches digitales oder satellitengestütztes Fernsehnetz mittels des Verfahrens nach einem der Ansprüche 1 bis 8 gesendet werden, die Folgendes umfasst:
- ein Modul zum Empfangen von Daten, wobei die Daten auf Archivdateien bezogen sind, die die verketteten Datenblöcke (C1, C2, C3) und die Ankündigungsnachrichten enthalten,
- ein Modul zum Rekonstruieren einer Archivdatei,
- ein Modul zum Dearchivieren der Archivdatei anhand von Informationen, die in der Ankündigungsnachricht enthalten sind, und zum Wiedergewinnen der Datenblöcke (C1, C2, C3),
- ein Modul zum dynamischen Erzeugen einer Playlist, die auf die empfangenen Datenblöcke (C1, C2, C3) Bezug nimmt,
- vorzugsweise ein Modul (W) für drahtlose Übertragung, das dem Endgerät ermöglicht, sich mit dem Empfänger zu verbinden und Ströme, die die Datenblöcke (C1, C2, C3) enthalten, zu streamen.

14. Computerprogrammprodukt, das Befehle enthält, die durch einen Prozessor lesbar sind und bei ihrer Ausführung ermöglichen, ein Sendeverfahren nach einem der Ansprüche 1 bis 8 oder ein Empfangsverfahren nach einem der Ansprüche 9 bis 11 auszuführen.

## Claims

1. Method for delivering at least one multimedia stream of at least one service (S1; S2; S3), within a digital-terrestrial-television or satellite-television network, comprising steps of:
- concatenating series of chunks (C1, C2, C3) corresponding to one or more streams, into archive files (QLS, fd1) without all the corresponding unarchiving information, the chunks (C1, C2, C3) each possessing an identifier and resulting from division of a corresponding multimedia stream into a plurality of services (S1, S2, S3), a given archive file comprising chunks (C1, C2, C3) relative to these various services (S1, S2, S3),
- delivering at least the archive files (QLS, fd1) over a channel of the network,
- delivering, repeatedly, at least for each archive file, advertisement messages (A, fa1, fa2) containing information required to unarchive the archive file, the advertisement messages being delivered in parallel to at least each corresponding archive file,
the method comprising delivering at least one associated file (EPG, fd2) containing description information of said at least one service (S1; S2; S3), on another channel of the network.

2. Method according to Claim 1, the method comprising repeatedly delivering advertisement messages corresponding to the associated files, this delivering preferably taking place before the delivery of the corresponding associated file.

3. Method according to Claim 2, each associated file comprising the identifier of a service (S1; S2; S3) to which the chunks (C1, C2, C3) belong.

4. Method according to any one of the preceding claims, the archive file grouping the chunks (C1, C2, C3) of the various services (S1, S2, S3) by successive transmission times (S1 C1, S2 C1, S3 C1, S1 C2, S2 C2, ...).

5. Method according to any one of the preceding claims, the advertisement messages of the archive file comprising the size of the chunks (C1, C2, C3) of the corresponding archive file.

6. Method according to any one of the preceding claims, the transmission of an advertisement message being repeated every N milliseconds during the transmission of the corresponding archive file, with N comprised between 500 and 60 000.

7. Method according to any one of Claims 2 to 6, the network delivering messages (D11, D12,..., D1n) of set size each comprising a header and a payload containing a packet obtained via segmentation of an archive file, or even also of a corresponding associated file.

8. Method according to any one of the preceding claims, the multimedia stream being in a streaming format, and in particular generated by an encoder (HLS).

9. Method for receiving, from a digital-terrestrial-television or satellite-television network, data delivered using the method according to any one of the preceding claims, comprising steps of:
- receiving segments resulting from a segmentation of the archive file,
- reconstructing the archive file from the segments,
- retrieving advertisement messages,
- unarchiving the archive file and retrieving therefrom a content composed of chunks (C1, C2, C3), dynamically constructing a playlist allowing said at least one service (S1; S2; S3) to be streamed to a portable terminal (T),
in which method, preferably, the chunks (C1, C2, C3) are delivered to said portable terminal (T) via a wireless link.

10. Method according to Claim 9, the chunks (C1, C2, C3) being read by the terminal (T) by way of said playlist, which orders said chunks in real time.

11. Method according to one of Claims 9 and 10, the chunks (C1, C2, C3) being sorted by service by the receiver (R) using information conveyed in the advertisement messages and description messages delivered over another channel of the network.

12. Digital device for processing at least one multimedia stream of at least one service (S1; S2; S3), with a view to delivering, using a method according to any one of Claims 1 to 8, data resulting from processing, over a digital-terrestrial-television or satellite-television network, comprising:
- a module for retrieving chunks (C1, C2, C3),
- a module for preparing data to be delivered, which module is configured to concatenate the series of chunks (C1, C2, C3) into archive files,
- a module for delivering the archive files and advertisement messages, and for sending these advertisement messages to a corresponding output port, with a view to repeatedly delivering them in parallel with each corresponding archive file.

13. Digital device for receiving data transmitted by a digital-terrestrial-television or satellite-television network via the method according to any one of Claims 1 to 8, comprising:
- a module for receiving data, including data relative to the archive files comprising the concatenated chunks (C1, C2, C3) and the advertisement messages,
- a module for reconstructing an archive file,
- a module for unarchiving the archive file, on the basis of information contained in the advertisement message, and for retrieving the chunks (C1, C2, C3),
- a module for dynamically creating a playlist referencing the received chunks (C1, C2, C3),
- preferably, a module (W) for transmitting wirelessly, allowing the terminal to connect to the receiver and to stream streams containing the chunks (C1, C2, C3).

14. Computer program product comprising instructions that are readable by a processor and that allow, on their execution, a delivering method according to any one of Claims 1 to 8 or a receiving method according to any one of Claims 9 to 11 to be executed.
